# EUROPEAN PATENT SPECIFICATION

(11) **EP 3 714 538 B1**
(45) Date of publication and mention of the grant of the patent: **22.02.2023**
(21) Application number: 17811462.5
(22) Date of filing: 20.11.2017
(51) Int. Cl.: H02M 1/32, H02M 5/293

(54) **CONTROL OF A POWER CONVERTER**
STEUERUNG EINES LEISTUNGSWANDLERS
COMMANDE D'UN CONVERTISSEUR DE COURANT

(43) Date of publication of application: 30.09.2020
(73) Proprietor: Hitachi Energy Switzerland AG, 5400 Baden (CH)
(72) Inventor: BUCHMANN, Beat, 5300 Turgi (CH); BAERLOCHER, Eugen, 5300 Turgi (CH)
(74) Representative: AWA Sweden AB
(86) International application number: PCT/EP2017/079712
(87) International publication number: WO 2019/096417

(56) References cited:
- EP-A1- 2 811 641
- FALAHI GHAZAL ET AL: "Low voltage ride through control of modular multilevel converter based HVDC systems", IECON 2014 - 40TH ANNUAL CONFERENCE OF THE IEEE INDUSTRIAL ELECTRONICS SOCIETY, IEEE, 29 October 2014 (2014-10-29), pages 4663-4668, XP032739087, DOI: 10.1109/IECON.2014.7049205 [retrieved on 2015-02-24]
- Hani Saad ET AL: "Simulation of Transients for VSC-HVDC Transmission Systems Based on Modular Multilevel Converters" In: "Transient Analysis of Power Systems", 28 November 2014 (2014-11-28), John Wiley & Sons, Ltd, XP055360272, ISBN: 978-1-118-35234-2 pages 317-359, DOI: 10.1002/9781118694190.ch9, figures 9.15, 9.16 page 332
- VASILADIOTIS MICHAIL ET AL: "Single-to-three-phase direct AC/AC modular multilevel converters with integrated split battery energy storage for railway interties", 2015 17TH EUROPEAN CONFERENCE ON POWER ELECTRONICS AND APPLICATIONS (EPE'15 ECCE-EUROPE), JOINTLY OWNED BY EPE ASSOCIATION AND IEEE PELS, 8 September 2015 (2015-09-08), pages 1-7, XP032800179, DOI: 10.1109/EPE.2015.7309176 [retrieved on 2015-10-27]
- TAO LIU ET AL: "VSC HVDC control strategy based on burst mode operation for low voltage ride through", 2016 IEEE 8TH INTERNATIONAL POWER ELECTRONICS AND MOTION CONTROL CONFERENCE (IPEMC-ECCE ASIA), IEEE, 22 May 2016 (2016-05-22), pages 3635-3639, XP032924864, DOI: 10.1109/IPEMC.2016.7512877 [retrieved on 2016-07-13]

## Description

### TECHNICAL FIELD

The present disclosure relates to a method and device for controlling a power converter.

### BACKGROUND

A Modular Multilevel Converter (MMC), also known as Chain-Link Converter (CLC), comprises a plurality of converter cells, or converter sub-modules, serially connected in converter phase legs, which may be divided into one or more branches, that in turn may be arranged in a star, delta, direct or indirect converter topology. Each converter cell comprises, in the form of a half-bridge or full-bridge circuit, a capacitor for storing energy and power semiconductor switches such as Insulated Gate Bipolar Transistor (IGBT) devices, Gate-Turn-Off Thyristor (GTO) devices, Integrated Gate Commutated Thyristor (IGCT) devices, or Metal-Oxide-Semiconductor Field-Effect Transistor (MOSFET) devices for connecting the capacitor to the converter branch/leg/arm with one or two polarities. MMCs may be used in electric power transmission, storage and generation systems such as Static Synchronous Compensator (STATCOM), Railway Interties, Pumped Hydro and High Voltage (HV) Direct Current (DC), HVDC, transmission. For Railway Interties and Pumped Hydro both direct and indirect topology can be used.

### SUMMARY

Embodiments of the present invention is intended to be used in a power converter, typically an MMC, in different applications like STATCOM, Railway Interties, Pumped Hydro and HVDC transmission.

The MMC may act as a power source for a power grid, e.g. a railway grid or an HVDC grid, and may then conventionally operate in either voltage control mode, in which the output voltage of the converter is controlled to a reference voltage regardless of the current, or in current control mode, in which the output current is controlled to a reference current regardless of the voltage. The voltage has to be controlled in the power grid in order for the loads connected to the grid to function properly, why at least one power source of the grid needs to be grid-forming, i.e. operating in voltage control mode. Thus, if the MMC is the only power source for the grid, e.g. if the grid is islanded from an (other) power distribution grid, the MMC has to control the voltage of the grid. Using conventional voltage control mode, this implies that the current is not controlled. In steady-state, this may not be a problem since the MMC operates at nominal voltage and current, but in case of faults or other transient episodes, such as grid failure or load steps, the current through the MMC may exceed its maximum allowed value activating overcurrent protection and disconnecting (tripping/stopping) the converter. Conventionally, a converter may thus only operate in voltage control mode when needed, e.g. during islanding, while operating in current control mode the rest of the time. However, a drawback is the time it takes to switch from one control mode to another, during which time fast transient episodes may still trip the converter.

In order to have the same control strategy regardless of whether the converter is controlling the voltage or not, the converter has to operate as a voltage source (which conventionally means that there are no current control loops), with the above mentioned drawback that during grid failures or load steps the current may exceed the allowed values and overcurrent protection stops the converter.

Relevant prior art for the invention is:
- ALAHI GHAZAL ET AL: "Low voltage ride through control of modular multilevel converter based HVDC systems", IECON 2014 - 40TH ANNUAL CONFERENCE OF THE IEEE INDUSTRIAL ELECTRONICS SOCIETY, IEEE, 29 October 2014 (2014-10-29), pages 4663-4668
   and
- Hani Saad ET AL: "Simulation of Transients for VSC-HVDC Transmission Systems Based on Modular Multilevel Converters" In: "Transient Analysis of Power Systems", 28 November 2014 (2014-11-28), John Wiley & Sons, Ltd, ISBN: 978-1-118-35234-2 pages 317-359.

Both documents disclose a method for controlling a Modular Multilevel converter during transient events such as disturbances.

The invention solves this problem by limiting the current above a certain limit during voltage control. Thus, there is no need for switching between different control modes.

According to an aspect of the present invention, there is provided a method for controlling an MMC connected to a first AC grid, e.g. via a first transformer or impedance (e.g. reactor), and to a second AC grid, e.g. via a second transformer or impedance (e.g. reactor). The method comprises steps according to claim 1.

According to another aspect of the present invention, there is provided a computer program product comprising computer-executable components for causing a converter controller to perform an embodiment of the method of the present disclosure when the computer-executable components are run on processing circuitry comprised in the converter controller.

According to another aspect of the present invention, there is provided a converter controller configured for controlling an MMC connected to a first AC grid, e.g. via a first transformer or impedance (e.g. reactor), and to a second AC grid, e.g. via a second transformer or impedance (e.g. reactor). The converter controller comprises processing circuitry, and data storage storing instructions executable by said processing circuitry whereby said converter controller is operative to calculate a first voltage reference based on real power and reactive power of the second grid measured in real-time and on a predetermined reference for the real power and for the reactive power. The converter controller is also operative to calculate a second voltage reference comprising a current-dependent part and a voltage-dependent part. The current-dependent part is dependent on whether a real-time absolute value of grid current of the second grid, e.g. measured or predicted in real-time, is above a predefined current threshold. The voltage-dependent part is dependent on whether an absolute value of a difference between grid voltage of the second grid measured in real-time and a calculated synthetic grid voltage is above a predefined voltage threshold. The converter controller is also operative to combine the first and second voltage references to a compounded reference voltage. The converter controller is also operative to control output converter voltage of the MMC at its second side towards the second AC grid, e.g. to the second transformer or impedance, based on the compounded voltage reference.

According to another aspect of the present invention, there is provided a converter arrangement comprising an embodiment of the converter controller of the present disclosure, and an embodiment of the MMC of the present disclosure.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic circuit diagram of an embodiment of an MMC, in accordance with the present invention.
Fig 2 is a schematic circuit diagram of an embodiment of an MMC cell, in accordance with the present invention.
Fig 3 is a schematic functional block diagram illustrating an embodiment of a converter controller, in accordance with the present invention.
Fig 4 is a simulation graph illustrating the output of the current-dependent part of an embodiment of the overcurrent control.
Fig 5 is a simulation graph illustrating the output of the voltage-dependent part of an embodiment of the overcurrent control.
Fig 6 is a schematic flow chart of an embodiment of the method of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

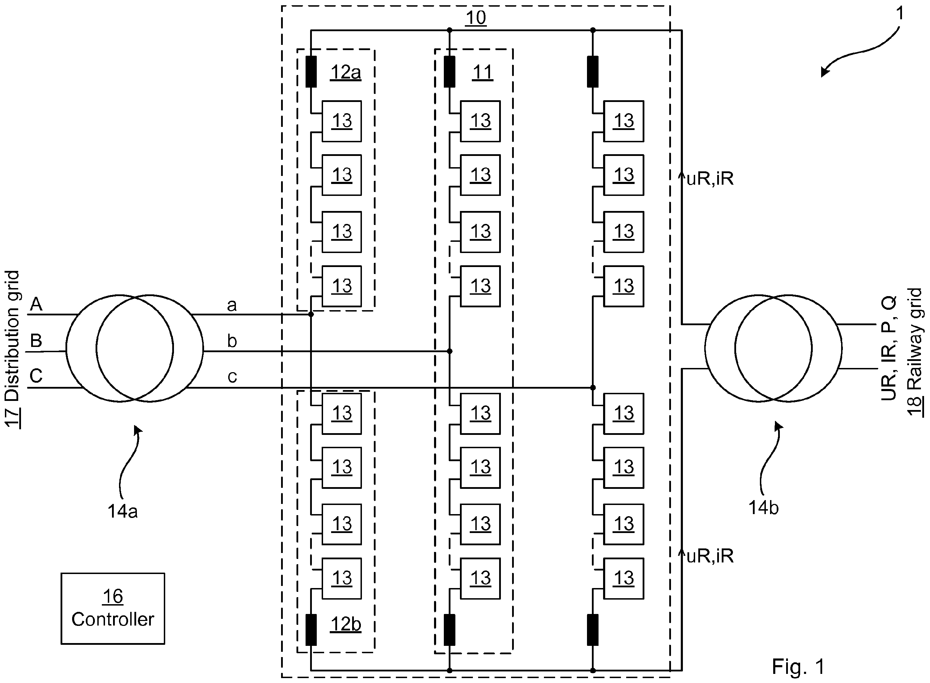

The following description is focused on three-phase to single-phase direct converter Railway Intertie MMC as in figure 1. But embodiments of the invention can also be applied to other topologies as for example three-phase to three-phase MMC in direct and/or indirect topology. Further, embodiments of the present disclosure may be used with the converter only connected to a single AC grid, the second grid as called herein. The invention is exemplified with reference to Railway Intertie Applications, which are preferred in some embodiments of the invention. However, other embodiments of the invention relate to other converter applications like e.g. Pumped Hydro.

On the railway side (2-phase side) there are two main operation scenarios required. One is operation in connected grid (where there are two or more power sources in the grid) and operation in island grid (the present MMC is the only power source and the current is typically defined by the connected load).

In order to have the same control strategy in both scenarios, the converter has to operate as a voltage source (which conventionally means that there are no current control loops). A drawback is that during grid failures or load steps the current may exceed the allowed values and overcurrent protection stops the converter. The invention solves this problem by limiting the current above a certain limit.

Figure 1 shows a converter arrangement 1 comprising an MMC to and a converter controller 16, as well as a first (here three-phase) transformer 14a and a second (here single-phase) transformer 14b. Optionally, either or both of the transformers 14 may be exchanged for an impedance, e.g. a reactor. What is said herein regarding a transformer is also relevant for such an impedance. The MMC 10 is in a double-star (also called double-Y or -wye) topology and connected between a first grid 17 (here a three-phase AC grid) e.g. a distribution grid connected to the first side of the converter, and a second grid 18 (here a single-phase AC grid) connected to the second side of the converter, e.g. a railway grid which may according to some conventions be called a two-phase grid, connected to a two-phase side of the converter, since its single phase is arguably formed between two outputs of the single-phase side of the converter 10. The three-phase side of the MMC is connected to the three-phase AC grid via the three-phase transformer 14a, transforming the three phases A, B and C of the three-phase AC grid to the three phases a, b and c of the three-phase side of the MMC 10. Similarly, the single-phase side of the MMC, having the current iR and the voltage uR, is connected to the single-phase AC grid, having the current IR and the voltage UR resulting in a real (active) power P and a reactive power Q, via the single-phase transformer 14b transforming the converter voltage uR to the grid voltage UR. The double-star topology of the MMC comprises one phase leg 11 (could also be called a converter phase) for each phase a, b and c, each phase leg 11 comprising two branches 12 (could alternatively be called arm, or phase leg e.g. if "converter phase" is used for what is herein called a phase leg), a first (also called upper) branch 12a and a second (also called lower) branch 12b, of series connected (also called chain-linked or cascaded) converter cells 13. The first phase a connects a first phase leg 11 at a point between the first and second branches 12a and 12b of said first phase leg, the second phase b connects a second phase leg 11 at a point between the first and second branches 12a and 12b of said second phase leg, and the third phase c connects a third phase leg 11 at a point between the first and second branches 12a and 12b of said third phase leg. A converter controller 16 comprised in the converter arrangement 1 controls the converter 10, e.g. calculates references and sends firing pulses.

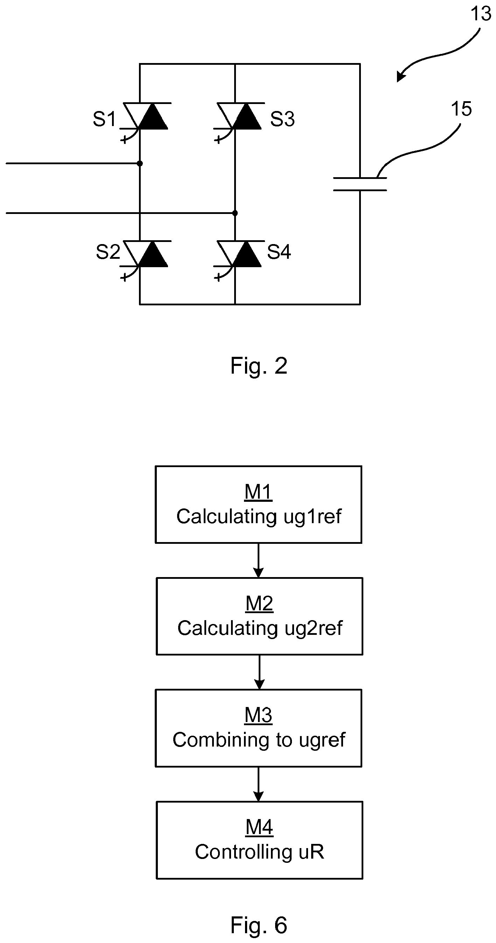

Figure 2 illustrates an embodiment of an MMC cell 13, e.g. of a converter 10 as illustrated in figure 1. The cell 13 comprises an energy storage 15, typically a capacitor arrangement comprising at least one capacitor, over which a DC voltage of the cell is formed. A plurality of semiconductor switches S form a half-bridge (also called monopolar) or full-bridge (also called bipolar) topology, herein (as is preferred in some embodiments of the invention) four semiconductor switches S1-S4 form a full-bridge topology. Each semiconductor switch S may comprise e.g. any of an IGBT device, a GTO device, an IGCT device, or a MOSFET device.

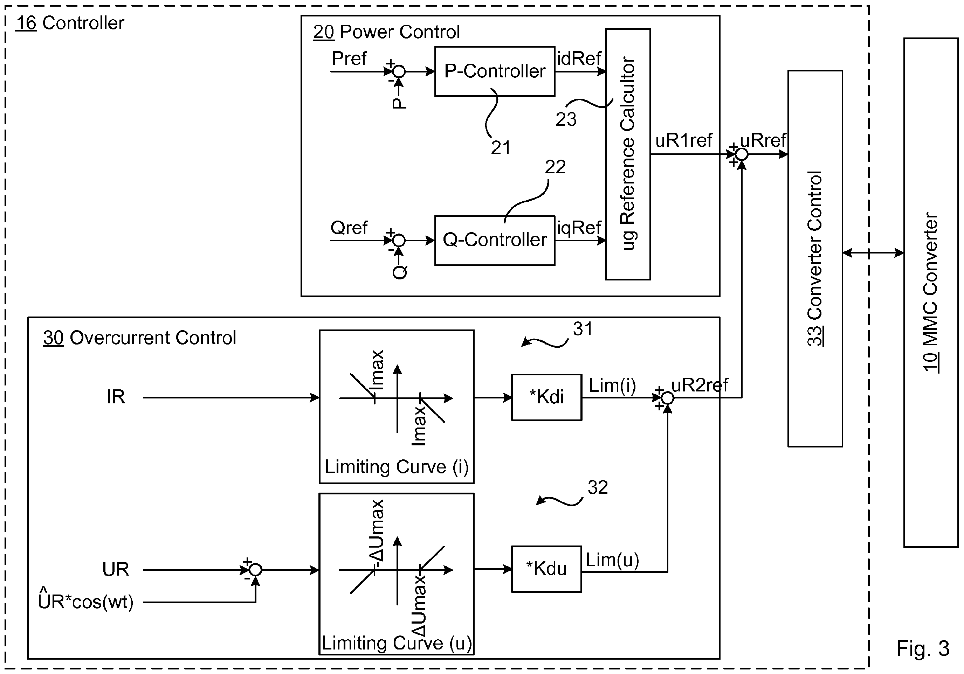

Figure 3 illustrates functionality of the controller 16 in accordance with the present invention. The functionality comprises a conventional power control 20 in combination with a novel overcurrent control 30.

The power control 20 is designed in a way that the converter 10 behaves like a voltage source and is therefore able to run in grid-connected scenario and in island scenario (without any switching between different control loops). The real-time measured real power P of the second grid 18 is deducted from the real power reference Pref for the second grid 18. The resulting difference is processed by the P-Controller 21 to produce the dq-system d-part idRef of the reference current for the converter output at its second side. Similarly, real-time measured reactive power Q of the second grid 18 is deducted from the reactive power reference Qref for the second grid 18. The resulting difference is processed by the Q-Controller 22 to produce the dq-system q-part iqRef of the reference current for the converter output at its second side. Calculation of the reference voltage uRiref is performed by the ug Reference Calculator 23 based on the dq-system d- and q-parts idRef and iqRef. The power control 20 provides a sinusoidal instantaneous reference voltage uRiref for the second (e.g. railway) side of the converter 10. Modulation and calculation of the switching instants of the semiconductor switches S is done in the converter control 33 outside of the power control 20 and taking into account also the output of the overcurrent control 30.

As already mentioned earlier in this document a drawback of this control strategy alone is that during dynamic events in the second grid 18 (grid failures/short circuits or load steps), the converter current can exceed the current limit of the converter 10, which would result in a short interruption of power transfer or even in a complete disconnection of the converter.

The overcurrent control 30 is divided into two parts, a current dependent part 31 and a voltage dependent part 32.

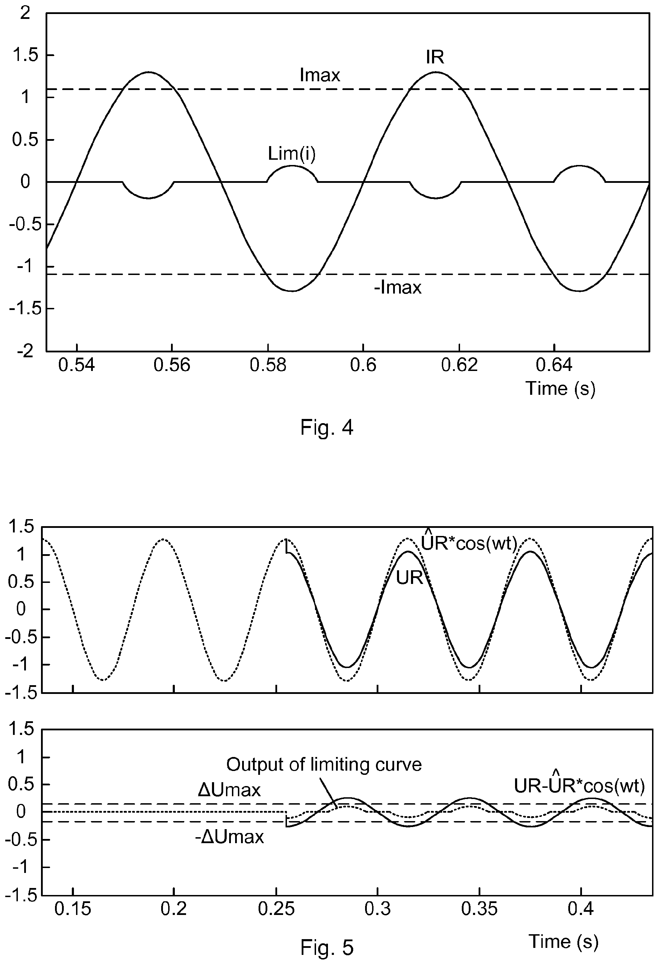

The current dependent part 31 uses the actual grid current IR of the second grid 18 measured in real-time as input of a limiting curve (i). If the grid current IR is within the range of -Imax to Imax, i.e. the absolute value of the grid current | IR | is below the predefined current threshold Imax, the output Lim(i) of the limiting curve is zero. If the grid current | IR | exceeds the current threshold, the output Lim(i) will be the difference between the threshold and the grid current, i.e. Imax- | IR | with the +/- sign depending on whether IR has exceeded the threshold when IR is positive or negative (i.e. at Imax or -Imax). A typical value for Imax is 115% of the nominal current of the second grid 18. The behaviour is shown in Figure 4.

The voltage dependent part uses the actual grid voltage UR of the second grid 18 measured in real-time as input of a limiting curve (u), as well as a calculated synthetic grid voltage which is slow to converge with the actual voltage and thus differ from the actual voltage during transient episodes. The synthetic grid voltage may be derived from the grid voltage amplitude Û, or the absolute value of the second grid 18 voltage UR in the dq-frame (UR_{dq}) e.g. modified with a relatively slow Phase-Locked Loop (PLL) having an angular velocity ω. In the example of figure 3, the synthetic grid voltage is calculated as Û^{∗}cos(ωt), where t is time, ω is derived from a relatively slow tuned PLL and the voltage amplitude Û is calculated in αβ-dq transformation (calculation of the amplitude may also have some delay due to filtering). The difference of these two voltages is the combined input of the voltage limiting curve (u). If the grid voltage difference ΔU between the actual grid voltage UR and the synthetic voltage is within the range of -Δumax to ΔUmax, i.e. the absolute value of the difference in grid voltage | ΔU | is below the predefined voltage threshold ΔUmax, the output of the limiting curve (u) is zero. If the grid voltage difference | ΔU | exceeds the voltage threshold, the output Lim(u) will be the difference between the voltage threshold and the grid voltage difference, i.e. ΔUmax - | ΔU | with the +/- sign depending on whether the ΔU has exceeded the threshold when ΔU is positive or negative (i.e. at ΔUmax or -ΔUmax). A typical value for ΔUmax is 15% of the nominal grid voltage of the second grid 18. The behaviour is shown in Figure 5.

The current limiting curve output and the voltage limiting curve output are multiplied by a respective gain factor (Kdi and Kdu, respectively) to give the outputs Lim(i) and Lim(u) of the current-dependent part 31 and the voltage-dependent part, respectively, which are summed up to the second voltage reference uR2ref signal. The second voltage reference uR2ref is then added to the first voltage reference uRiref from the power control 20 to give the final, compounded voltage reference uRref for the converter. The compounded voltage reference uRref is used by the converter control 33 for producing firing signals to the switches S of the MMC 10 based on the compounded voltage reference uRref for the MMC to produce its second side output converter voltage uR.

Although an overcurrent control 30 may be efficient with only the current-dependent part 31, it is preferred to also use a voltage-dependent part 32 in order for overcurrent control to react faster. However, in some embodiments of the present disclosure, the voltage-dependent part may be optional.

Figure 6 illustrates an embodiment of the method of the present invention, for controlling an MMC 10 connected to a first AC grid 17 via a first transformer 14a and to a second AC grid 18 via a second transformer 14b. The method comprises calculating M1 a first voltage reference uRiref based on real power P and reactive power Q of the second grid 18 measured in real-time and on a predetermined reference for the real power Pref and for the reactive power Qref. The method also comprises calculating M2 a second voltage reference uR2ref comprising a current-dependent part 31 and a voltage-dependent part 32. The current-dependent part 31 is dependent on whether an absolute value of grid current IR of the second grid 18 measured in real-time is above a predefined current threshold Imax. The voltage-dependent part 32 is dependent on whether an absolute value of a difference ΔU between grid voltage UR of the second grid 18 measured in real-time and a calculated synthetic grid voltage is above a predefined voltage threshold ΔUmax. The method also comprises combining M3 the first and second voltage references to a compounded reference voltage uRref. The method also comprises controlling M4 output converter voltage uR of the MMC to the second transformer 14b based on the compounded voltage reference.

In some embodiments of the present invention, the synthetic voltage is calculated based on the grid voltage amplitude Û of the second grid 18 modified with a PLL ω. In some embodiments, the synthetic voltage is calculated as Û^{∗}cos(ωt), where t is time.

In some embodiments of the present invention, the output Lim(i) of the current-dependent part 31 is zero when the absolute value of the grid current IR is below the current threshold (Imax).

In some embodiments of the present invention, the output Lim(u) of the voltage-dependent part 32 is zero when the absolute value of the voltage difference ΔU is below the voltage threshold ΔUmax.

In some embodiments of the present invention, the MMC 10 is a three-to-single phase converter.

Additionally or alternatively, in some embodiments of the present invention, the MMC 10 is in a double-star topology.

Additionally or alternatively, in some embodiments of the present invention, the second AC grid 18 is a railway grid.

In some embodiments of the present invention, the current threshold is within the range of 110-120% of the nominal current of the second grid 18, e.g. 115%.

Additionally or alternatively, in some embodiments of the present invention, the voltage threshold is within the range of 10-20% of the nominal voltage of the second grid 18, e.g. 15%.

According to an embodiment of the present disclosure, there is provided a method for controlling a power converter 10 connected to a second AC grid 18 via a second transformer 14b, and optionally also to a first AC grid 17 via a first transformer 14a. The method comprises calculating M1 a first voltage reference uRiref based on real power P and reactive power Q of the second grid and on a reference for the real power and for the reactive power. The method also comprises calculating M2 a second voltage reference uR2ref comprising a current-dependent part. The current-dependent part is dependent on whether an absolute value of grid current IR of the second grid measured in real-time is above a predefined current threshold. The method also comprises combining M3 the first and second voltage references to a compounded reference voltage uRref. The method also comprises controlling M4 output converter voltage uR of the MMC to the second transformer based on the compounded voltage reference.

Embodiments of the method of the present invention may be performed by a controller 16 of the converter 10, both comprised in the converter arrangement 1, which controller comprises processing circuitry associated with data storage. The processing circuitry may be equipped with one or more processing units CPU in the form of microprocessor(s) executing appropriate software stored in associated memory for procuring required functionality. However, other suitable devices with computing capabilities could be comprised in the processor, e.g. an application specific integrated circuit (ASIC), a field programmable gate array (FPGA), a complex programmable logic device (CPLD), etc., in order to control the converter 10 and perform embodiments of the method of the present disclosure, while executing appropriate software, e.g. stored in a suitable data storage, such as a RAM, a Flash memory or a hard disk, or in the processing circuitry itself (as e.g. in case of an FPGA).

Embodiments of the present invention may be conveniently implemented using one or more conventional general purpose or specialized digital computer, computing device, machine, or microprocessor, including one or more processors, memory and/or computer readable storage media programmed according to the teachings of the present disclosure. Appropriate software coding can readily be prepared by skilled programmers based on the teachings of the present disclosure, as will be apparent to those skilled in the software art.

In some embodiments, the present invention includes a computer program product which is a non-transitory storage medium or computer readable medium (media) having instructions stored thereon/in which can be used to program a computer to perform any of the methods/processes of the present invention. Examples of the storage medium can include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), FPGA or any type of media or device suitable for storing instructions and/or data.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A method for controlling a Modular Multilevel Converter, MMC, (10), connected to a first AC grid (17) and to a second AC grid (18), the method comprising:
calculating (M1) a first voltage reference (uR1ref) based on real power (P) and reactive power (Q) of the second grid (18) measured in real-time and on a predetermined reference for the real power (Pref) and for the reactive power (Qref);
calculating (M2) a second voltage reference (uR2ref) comprising a current-dependent part (31) and a voltage-dependent part (32), wherein:
the current-dependent part is dependent on whether a real-time absolute value of grid current (IR) of the second grid (18) is above a predefined current threshold (Imax), wherein the output (Lim(i)) of the current-dependent part (31) is zero when the absolute value of the grid current (IR) is below the current threshold (Imax), whereby the output (Lim (i)) of the current-dependent part is based on the difference between the current threshold and the grid current when the absolute value of the grid current exceeds the current threshold, and
the voltage-dependent part is dependent on whether an absolute value of a difference (ΔU) between grid voltage (UR) of the second grid (18) measured in real-time and a synthetic grid voltage is above a predefined voltage threshold (ΔUmax), wherein the output (Lim(u)) of the voltage-dependent part (32) is zero when the absolute value of the voltage difference (ΔU) is below the voltage threshold (ΔUmax), whereby the output (Lim (u)) of the voltage-dependent part is based on the difference between the voltage threshold and the grid voltage difference when the absolute value of the grid voltage difference exceeds the voltage threshold,
and wherein the synthetic grid voltage is calculated based on a grid voltage amplitude (Û) of the second grid (18) or an absolute value of the second grid (18) voltage in the dq-frame (UR_{dq});
and wherein the synthetic grid voltage is calculated being further based on an angular velocity (ω) of a Phase-Locked Loop, PLL;
combining (M3) the first and second voltage references to a compounded reference voltage (uRref); and
controlling (M4) output converter voltage (uR) of the MMC towards the second AC grid based on the compounded voltage reference.

2. The method of claim 1, wherein the synthetic grid voltage is calculated as Û^{∗}cos(ωt), where t is time.

3. The method of any preceding claim, wherein the MMC (10) is a three-to-single phase converter.

4. The method of any preceding claim, wherein the MMC (10) is in a double-star topology.

5. The method of any preceding claim, wherein the second AC grid (18) is a railway grid.

6. The method of any preceding claim, wherein the current threshold is within the range of 110-120% of a nominal current of the second grid (18).

7. The method of any preceding claim, wherein the voltage threshold is within the range of 10-20% of a nominal voltage of the second grid (18).

8. A computer program product comprising computer-executable components for causing a converter controller (16) to perform the method of any preceding claim when the computer-executable components are run on processing circuitry comprised in the converter controller.

9. A converter controller (16) configured for controlling a Modular Multilevel Converter, MMC, (10), connected to a first AC grid (17) and to a second AC grid (18), the converter controller comprising:
processing circuitry; and
data storage storing instructions executable by said processing circuitry whereby said converter controller is operative to:
calculate a first voltage reference (uR1ref) based on real power (P) and reactive power (Q) of the second grid (18) measured in real-time and on a predetermined reference for the real power (Pref) and for the reactive power (Qref);
calculate a second voltage reference (uR2ref) comprising a current-dependent part (31) and a voltage-dependent part (32), wherein:
the current-dependent part is dependent on whether a real-time absolute value of grid current (IR) of the second grid (18) is above a predefined current threshold (Imax), wherein the output (Lim(i)) of the current-dependent part (31) is zero when the absolute value of the grid current (IR) is below the current threshold (Imax), whereby the output (Lim (i)) of the current-dependent part is based on the difference between the current threshold and the grid current when the absolute value of the grid current exceeds the current threshold, and
the voltage-dependent part is dependent on whether an absolute value of a difference (ΔU) between grid voltage (UR) of the second grid (18) measured in real-time and a synthetic grid voltage is above a predefined voltage threshold (ΔUmax), wherein the output (Lim(u)) of the voltage-dependent part (32) is zero when the absolute value of the voltage difference (ΔU) is below the voltage threshold (ΔUmax), whereby the output (Lim (u)) of the voltage-dependent part is based on the difference between the voltage threshold and the grid voltage difference when the absolute value of the grid voltage difference exceeds the voltage threshold,
and wherein the synthetic grid voltage is calculated based on a grid voltage amplitude (Û) of the second grid (18) or an absolute value of the second grid (18) voltage in the dq-frame (UR_{dq}), and wherein the synthetic grid voltage is calculated being further based on an angular velocity (ω) of a Phase-Locked Loop, PLL;
combine the first and second voltage references to a compounded reference voltage (uRref); and
control output converter voltage (uR) of the MMC towards the second AC grid (18) based on the compounded voltage reference.

10. A converter arrangement (1) comprising:
the converter controller (16) of claim 9; and
the MMC (10).

## Patentansprüche

1. Verfahren zur Steuerung eines modularen Multilevel-Umrichters (MMC) (10), der an ein erstes Wechselstromnetz (17) und an ein zweites Wechselstromnetz (18) angeschlossen ist, wobei das Verfahren Folgendes umfasst:
Berechnen (M1) einer ersten Spannungsreferenz (uR1ref) auf der Grundlage der in Echtzeit gemessenen Wirkleistung (P) und Blindleistung (Q) des zweiten Netzes (18) und einer vorgegebenen Referenz für die Wirkleistung (Pref) und für die Blindleistung (Qref);
Berechnen (M2) einer zweiten Spannungsreferenz (uR2ref) mit einem stromabhängigen Teil (31) und einem spannungsabhängigen Teil (32), wobei:
der stromabhängige Teil davon abhängig ist, ob ein Echtzeit-Absolutwert des Netzstroms (IR) des zweiten Netzes (18) über einem vordefinierten Stromschwellenwert (Imax) liegt, wobei der Ausgang (Lim(i)) des stromabhängigen Teils (31) Null ist, wenn der Absolutwert des Netzstroms (IR) unter dem Stromschwellenwert (Imax) liegt, wodurch der Ausgang (Lim(i)) des stromabhängigen Teils auf der Differenz zwischen dem Stromschwellenwert und dem Netzstrom basiert, wenn der Absolutwert des Netzstroms den Stromschwellenwert überschreitet, und
der spannungsabhängige Teil davon abhängig ist, ob ein Absolutwert einer Differenz (ΔU) zwischen einer in Echtzeit gemessenen Netzspannung (UR) des zweiten Netzes (18) und einer synthetischen Netzspannung über einem vordefinierten Spannungsschwellenwert (ΔUmax) liegt, wobei der Ausgang (Lim(u)) des spannungsabhängigen Teils (32) Null ist, wenn der Absolutwert der Spannungsdifferenz (ΔU) unter dem Spannungsschwellenwert (ΔUmax) liegt, wodurch der Ausgang (Lim(u)) des spannungsabhängigen Teils auf der Differenz zwischen dem Spannungsschwellenwert und der Netzspannungsdifferenz basiert, wenn der Absolutwert der Netzspannungsdifferenz den Spannungsschwellenwert überschreitet, und
wobei die synthetische Netzspannung auf der Grundlage einer Netzspannungsamplitude (Û) des zweiten Netzes (18) oder eines Absolutwertes der Spannung des zweiten Netzes (18) im dq-Frame (UR_{dq}) berechnet wird; und
wobei die Berechnung der synthetischen Netzspannung ferner auf der Grundlage der Winkelgeschwindigkeit (ω) einer PLL (Phase-Locked Loop) erfolgt;
Kombinieren (M3) der ersten und zweiten Spannungsreferenz zu einer zusammengesetzten Referenzspannung (uRref); und
Steuern (M4) der Umrichterausgangsspannung (uR) des MMC in Richtung des zweiten Wechselstromnetzes auf der Grundlage der zusammengesetzten Spannungsreferenz.

2. Verfahren nach Anspruch 1, wobei die synthetische Netzspannung als Û*cos(ωt) berechnet wird, wobei t die Zeit ist.

3. Verfahren nach einem der vorhergehenden Ansprüche, wobei der MMC (10) ein Drei-zu-Ein-Phasen-Umrichter ist.

4. Verfahren nach einem der vorhergehenden Ansprüche, wobei der MMC (10) in einer Doppelstern-Topologie ausgeführt ist.

5. Verfahren nach einem der vorhergehenden Ansprüche, wobei das zweite Wechselstromnetz (18) ein Bahnstromnetz ist.

6. Verfahren nach einem der vorhergehenden Ansprüche, wobei der Stromschwellenwert im Bereich von 110-120 % eines Nennstroms des zweiten Netzes (18) liegt.

7. Verfahren nach einem der vorhergehenden Ansprüche, wobei der Spannungsschwellenwert im Bereich von 10-20 % einer Nennspannung des zweiten Netzes (18) liegt.

8. Computerprogrammprodukt, das computerausführbare Komponenten umfasst, um eine Umrichtersteuerung (16) zu veranlassen, das Verfahren nach einem der vorhergehenden Ansprüche durchzuführen, wenn die computerausführbaren Komponenten auf einer Verarbeitungsschaltung ausgeführt werden, die in der Umrichtersteuerung enthalten ist.

9. Umrichtersteuerung (16), die zur Steuerung eines modularen Multilevel-Umrichters, MMC, (10) ausgebildet ist, der mit einem ersten Wechselstromnetz (17) und einem zweiten Wechselstromnetz (18) verbunden ist, wobei die Umrichtersteuerung Folgendes umfasst:
Verarbeitungsschaltungen; und
einen Datenspeicher, der Anweisungen speichert, die von der Verarbeitungsschaltung ausgeführt werden können, wodurch die Umrichtersteuerung für Folgendes betriebsfähig ist:
Berechnen einer ersten Spannungsreferenz (uR1ref) auf der Grundlage der in Echtzeit gemessenen Wirkleistung (P) und Blindleistung (Q) des zweiten Netzes (18) und einer vorbestimmten Referenz für die Wirkleistung (Pref) und für die Blindleistung (Qref);
Berechnen einer zweiten Spannungsreferenz (uR2ref), die einen stromabhängigen Teil (31) und einen spannungsabhängigen Teil (32) umfasst, wobei:
der stromabhängige Teil davon abhängt, ob ein Echtzeit-Absolutwert des Netzstroms (IR) des zweiten Netzes (18) über einem vordefinierten Stromschwellenwert (Imax) liegt,
wobei der Ausgang (Lim(i)) des stromabhängigen Teils (31) Null ist, wenn der Absolutwert des Netzstroms (IR) unter dem Stromschwellenwert (Imax) liegt,
wobei der Ausgang (Lim (i)) des stromabhängigen Teils auf der Differenz zwischen dem Stromschwellenwert und dem Netzstrom basiert, wenn der Absolutwert des Netzstroms den Stromschwellenwert überschreitet, und der spannungsabhängige Teil davon abhängig ist, ob ein Absolutwert einer Differenz (ΔU) zwischen der in Echtzeit gemessenen Netzspannung (UR) des zweiten Netzes (18) und einer synthetischen Netzspannung über einem vordefinierten Spannungsschwellenwert (ΔUmax) liegt,
wobei der Ausgang (Lim(u)) des spannungsabhängigen Teils (32) Null ist, wenn der Absolutwert der Spannungsdifferenz (ΔU) unter dem Spannungsschwellenwert (ΔUmax) liegt,
wobei der Ausgang (Lim (u)) des spannungsabhängigen Teils auf der Differenz zwischen dem Spannungsschwellenwert und der Netzspannungsdifferenz basiert, wenn der Absolutwert der Netzspannungsdifferenz den Spannungsschwellenwert überschreitet, und
wobei die synthetische Netzspannung auf der Grundlage einer Netzspannungsamplitude (Û) des zweiten Netzes (18) oder eines Absolutwertes der Spannung des zweiten Netzes (18) im dq-Frame (URdq) berechnet wird, und
wobei die Berechnung der synthetischen Netzspannung ferner auf der Grundlage der Winkelgeschwindigkeit (ω) einer PLL (Phase-Locked Loop) erfolgt;
Kombinieren der ersten und zweiten Spannungsreferenz zu einer zusammengesetzten Referenzspannung (uRref); und
Steuern der Umrichterausgangsspannung (uR) des MMC in Richtung des zweiten Wechselstromnetzes (18) auf der Grundlage der zusammengesetzten Spannungsreferenz.

10. Umrichteranordnung (1), die Folgendes umfasst:
die Umrichtersteuerung (16) nach Anspruch 9; und
den MMC (10).

## Revendications

1. Procédé de commande d'un convertisseur multiniveau modulaire, MMC, (10) connecté à un premier réseau AC (17) et à un second réseau AC (18), le procédé comprenant les étapes suivantes :
calculer (M1) une première référence de tension (uR1ref) basée sur la puissance réelle (P) et la puissance réactive (Q) du second réseau (18) mesurées en temps réel et sur une référence prédéterminée pour la puissance réelle (Pref) et pour la puissance réactive (Qref) ;
calculer (M2) une seconde référence de tension (uR2ref) comprenant une partie dépendant du courant (31) et une partie dépendant de la tension (32), où :
la partie dépendant du courant dépend du fait qu'une valeur absolue en temps réel du courant de réseau (IR) du second réseau (18) est supérieure à un seuil de courant prédéfini (Imax), où la sortie (Lim(i)) de la partie dépendant du courant (31) est nulle lorsque la valeur absolue du courant de réseau (IR) est inférieure au seuil de courant (Imax), moyennant quoi la sortie (Lim(i)) de la partie dépendant du courant est basée sur la différence entre le seuil de courant et le courant de réseau lorsque la valeur absolue du courant de réseau dépasse le seuil de courant, et
la partie dépendant de la tension dépend du fait qu'une valeur absolue d'une différence (ΔU) entre la tension de réseau (UR) du second réseau (18) mesurée en temps réel et une tension de réseau synthétique est supérieure à un seuil de tension prédéfini (ΔUmax), où la sortie (Lim(u)) de la partie dépendant de la tension (32) est nulle lorsque la valeur absolue de la différence de tension (ΔU) est inférieure au seuil de tension (ΔUmax), moyennant quoi la sortie (Lim(u)) de la partie dépendant de la tension est basée sur la différence entre le seuil de tension et la différence de tension de réseau lorsque la valeur absolue de la différence de tension de réseau dépasse le seuil de tension,
et où la tension de réseau synthétique est calculée sur la base d'une amplitude de tension de réseau (Û) du second réseau (18) ou d'une valeur absolue de la tension du second réseau (18) dans la trame dq (UR_{dq}) ;
et où la tension de réseau synthétique est calculée en étant en outre basée sur une vitesse angulaire (ω) d'une boucle à verrouillage de phase, PLL ;
combiner (M3) les première et seconde références de tension à une tension de référence composée (uRref) ; et commander (M4) la tension de sortie du convertisseur (uR) du MMC vers le second réseau AC sur la base de la référence de tension composée.

2. Procédé selon la revendication 1, dans lequel la tension de réseau synthétique est calculée comme Û*cos(ωt), où t est le temps.

3. Procédé selon l'une quelconque des revendications précédentes, dans lequel le MMC (10) est un convertisseur triphasé vers monophasé.

4. Procédé selon l'une quelconque des revendications précédentes, dans lequel le MMC (10) se trouve dans une topologie à double étoile.

5. Procédé selon l'une quelconque des revendications précédentes, dans lequel le second réseau AC (18) est un réseau de chemin de fer.

6. Procédé selon l'une quelconque des revendications précédentes, dans lequel le seuil de courant se situe dans la plage s'étendant de 110 % à 120 % d'un courant nominal du second réseau (18).

7. Procédé selon l'une quelconque des revendications précédentes, dans lequel le seuil de tension se situe dans la plage s'étendant de 10 % à 20 % d'une tension nominale du second réseau (18).

8. Produit programme informatique comprenant des composants exécutables par ordinateur pour amener un contrôleur de convertisseur (16) à exécuter le procédé de l'une quelconque des revendications précédentes lorsque les composants exécutables par ordinateur sont exécutés sur des circuits de traitement contenus dans le contrôleur de convertisseur.

9. Contrôleur de convertisseur (16) configuré pour commander un convertisseur multiniveau modulaire, MMC, (10) connecté à un premier réseau AC (17) et à un second réseau AC (18), le contrôleur de convertisseur comprenant :
des circuits de traitement ; et
une mémoire de stockage de données stockant des instructions exécutables par lesdits circuits de traitement, moyennant quoi ledit contrôleur de convertisseur est opérationnel pour :
calculer une première référence de tension (uR1ref) basée sur la puissance réelle (P) et la puissance réactive (Q) du second réseau (18) mesurées en temps réel et sur une référence prédéterminée pour la puissance réelle (Pref) et pour la puissance réactive (Qref) ;
calculer une seconde référence de tension (uR2ref) comprenant une partie dépendant du courant (31) et une partie dépendant de la tension (32), où :
la partie dépendant du courant dépend du fait qu'une valeur absolue en temps réel du courant de réseau (IR) du second réseau (18) est supérieure à un seuil de courant prédéfini (Imax), où la sortie (Lim(i)) de la partie dépendante du courant (31) est nulle lorsque la valeur absolue du courant de réseau (IR) est inférieure au seuil de courant (Imax), moyennant quoi la sortie (Lim(i)) de la partie dépendant du courant est basée sur la différence entre le seuil de courant et le courant de réseau lorsque la valeur absolue du courant de réseau dépasse le seuil de courant, et
la partie dépendant de la tension dépend du fait qu'une valeur absolue d'une différence (ΔU) entre la tension de réseau (UR) du second réseau (18) mesurée en temps réel et une tension de réseau synthétique est supérieure à un seuil de tension prédéfini (ΔUmax), où la sortie (Lim(u)) de la partie dépendant de la tension (32) est nulle lorsque la valeur absolue de la différence de tension (ΔU) est inférieure au seuil de tension (ΔUmax), moyennant quoi la sortie (Lim(u)) de la partie dépendant de la tension est basée sur la différence entre le seuil de tension et la différence de tension de réseau lorsque la valeur absolue de la différence de tension de réseau dépasse le seuil de tension,
et où la tension de réseau synthétique est calculée sur la base d'une amplitude de tension de réseau (Û) du second réseau (18) ou d'une valeur absolue de la tension du second réseau (18) dans la trame dq (UR_{dq}), et où la tension de réseau synthétique est calculée en étant en outre basée sur une vitesse angulaire (ω) d'une boucle à verrouillage de phase, PLL ;
combiner les première et seconde références de tension à une tension de référence composée (uRref) ; et
commander la tension de sortie du convertisseur (uR) du MMC vers le second réseau AC (18) sur la base de la référence de tension composée.

10. Agencement de convertisseur (1) comprenant :
le contrôleur de convertisseur (16) de la revendication 9 ; et
le MMC (10).
